Europäisches Patentamt

European Patent Office

Office européen des brevets

(19)

(11) Numéro de publication : **0 029 838**
**B1**

(12) # FASCICULE DE BREVET EUROPÉEN

(45) Date de publication du fascicule du brevet :
**02.05.84**

(21) Numéro de dépôt : **80901071.3**

(22) Date de dépôt : **21.05.80**

(86) Numéro de dépôt international :
**PCT/FR 80/00083**

(87) Numéro de publication internationale :
**WO WO/80025 (27.11.80 Gazettee 80/27)**

(51) Int. Cl.³ : **B 64 C 27/18**, F 02 K 3/00,
F 02 C 6/06, F 04 D 25/04,
F 02 C 3/10

(54) **TURBO-GENERATEUR POUR VOILURE TOURNANTE D'HELICOPTERE.**

(30) Priorité : **21.05.79 FR 7912879**

(43) Date de publication de la demande :
**10.06.81 Bulletin 81/23**

(45) Mention de la délivrance du brevet :
**02.05.84 Bulletin 84/18**

(84) Etats contractants désignés :
**CH DE GB LI NL SE**

(56) Documents cités :
**DE-A- 1 426 352**
**FR-A- 1 373 972**
**FR-A- 2 373 444**
**US-A- 2 150 670**

(73) Titulaire : **DECHAUX, Charles**
**4 Avenue de la Porte de Sèvres**
**F-75015 Paris (FR)**

(72) Inventeur : **DECHAUX, Charles**
**4 Avenue de la Porte de Sèvres**
**F-75015 Paris (FR)**

(74) Mandataire : **Obolensky, Michel et al**
**Cabinet René G. Dupuy et Jean M. L. Loyer 14, rue La Fayette**
**F-75009 Paris (FR)**

Turbo-générateur pour voilure tournante d'hélicoptère

L'invention se rapporte à un turbo-générateur d'air comprimé destiné à alimenter par exemple les pales à réaction de la voilure tournante d'un hélicoptère.

Les turbo-générateurs assumant une telle fonction ont, de nos jours, leurs compresseurs alignés avec à la suite des turbo-réacteurs qui les entraînent.

Le brevet FR-A-2 373 444 décrit un ensemble complexe comportant deux turbo-moteurs à axes parallèles entraînant chacun une turbine, les axes des transmissions mécaniques des deux turbines convergent vers l'axe du rotor. Ce brevet FR-A-2 373 444, pour obtenir une longueur moindre, utilise deux turbo-moteurs plus petits et ce n'est que la nécessité de transmettre d'une manière équilibrée la puissance de chaque turbine à l'arbre du rotor qui implique la convergence des transmissions.

Dans cette réalisation, le raccourcissement ne concourt pas à la stabilité ni à la maniabilité, puisque la masse se trouve répartie sur une grande surface horizontale.

Le brevet FR-A-1 373 972 décrit un turbo-générateur d'air comprimé pour l'alimentation des pales à réaction de la voilure tournante d'un hélicoptère selon le préambule de la revendication 1.

L'invention vise à raccourcir très sensiblement la longueur de l'ensemble turbo-réacteur/turbo-compresseur en vue d'améliorer le rendement, d'éviter les vibrations et faciliter le refroidissement des paliers.

L'invention concerne un turbo-générateur d'air comprimé pour l'alimentation des pales à réaction de la voilure tournante d'un hélicoptère, comprenant un compresseur entraîné en rotation par un arbre solidaire de la couronne rotative d'une turbine motrice, caractérisé en ce que cette turbine motrice est placée dans la tubulure d'échappement des gaz d'un turbo-réacteur, les axes longitudinaux des turbo-réacteur et turbo-compresseur étant convergents, et en ce que le compresseur est suspendu par une articulation sous le turbo-réacteur, alors que l'arbre est articulé par rapport à la tubulure d'échappement des gaz dudit turbo-réacteur.

En conséquence, selon l'invention, le turbo-réacteur et le turbo-compresseur ont leurs axes longitudinaux respectifs convergents.

Cette disposition permet de placer le turbo-compresseur sous le turbo-réacteur.

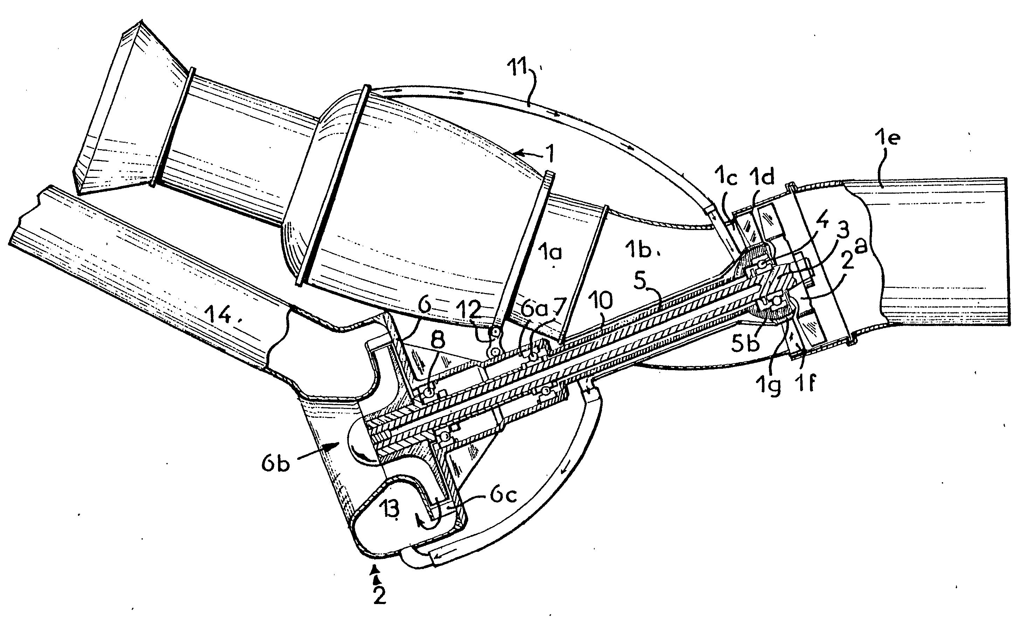

D'autres particularités et avantages apparaîtront à la lecture de la description et des revendications qui suivent, faites en regard du dessin annexé, lequel représente en coupe un ensemble turbo-réacteur/turbo-compresseur réalisé selon l'invention.

Comme on le voit sur cette figure, le turbo-générateur comprend un turbo-réacteur 1 et un turbo-compresseur 2 placés l'un au-dessus de l'autre, mais dont les axes longitudinaux convergent.

La tubulure d'éjection de gaz 1a est prolongée vers l'arrière par une tubulure coudée 1b dont le plan transversal arrière 1c est perpendiculaire à l'axe longitudinal du turbo-compresseur.

Au-delà de ce plan la tubulure se prolonge par une manchette cylindrique 1d, elle-même suivie par une autre tubulure coudée 1e mais d'orientation inverse de la précédente.

A l'intérieur de la manchette cylindrique 1d sont disposées la couronne d'aubes fixes 1f et la couronne d'aubes motrices 2a solidaire de l'arbre 3 du compresseur.

Cet arbre 3 tourne par l'intermédiaire d'un roulement oscillant 4 à l'intérieur d'un tube 5 prolongeant le boîtier 6a du corps 6 du compresseur 2. Des roulements 7 et 8 sont interposés entre cet arbre et les parties fixes.

Ce tube 5 se termine à son extrémité postérieure par une tête sphérique 5b enfermant le roulement 4 et formant rotule avec la partie sphérique de la couronne 1g supportant les aubes fixes 1f.

Dans sa partie postérieure située à l'intérieur de la tubulure coudée 1b le tube 5 est enfermé dans un fourreau concentrique ménageant un espace annulaire 10.

En face de la tête 5b donc au voisinage du roulement 4, cet espace reçoit une tubulure 11 lui apportant de l'air à haute pression provenant du compresseur du turbo-réacteur, air qui assure donc le refroidissement de ce roulement arrière.

Pour pallier les effets de la dilatation, le corps 6 est soutenu par le turbo-réacteur par une bielle 12.

A l'extrémité de l'arbre 3 est clavetée la couronne d'aubes du compresseur 2, couronne qui tourne à l'intérieur de la chambre de compression aspirant l'air par l'orifice central 6b et le refoulant par les orifices latéraux 6c communiquant avec la chambre de distribution 13 reliée directement au rotor de la voilure tournante par la conduite d'alimentation 14.

La chambre de distribution, contrairement aux chambres traditionnelles en forme d'hélice est de section radiale constante de manière à éviter les turbulences de l'air qui en ressort à une pression d'environ 3 bars.

L'invention trouve une application particulièrement intéressante dans l'alimentation des pales à réaction de la voilure tournante d'un hélicoptère, et dans tous les cas où l'on désire un flux à forte pression. On observe en effet qu'en raison de prélèvement d'air haute pression (par exemple 5 kg/cm$^2$) partant du compresseur du turbo-réacteur 1 et son amenée par la canalisation 11 dans l'espace annulaire, la pression de cet air, lorsqu'il atteint la chambre 13, vient s'ajouter à la pression du turbo-compresseur 2 (par exemple 3 kg/cm$^2$).

**Revendications**

1. Turbo-générateur d'air comprimé pour l'alimentation des pales à réaction de la voilure tournante d'un hélicoptère, comprenant un compresseur (2, 1f, 6, 6a) entraîné en rotation par un arbre (3) solidaire de la couronne rotative (2) d'une turbine motrice caractérisé en ce que cette turbine motrice est placée dans la tubulure d'échappement (1b, 1d) des gaz d'un turbo-réacteur, les axes longitudinaux des turbo-réacteur (1) et turbo-compresseur (2, 1f, 6, 6a) étant convergents, et en ce que le compresseur est suspendu par une articulation (12) sous le turbo-réacteur (1), alors que l'arbre (3) est articulé par rapport à la tubulure d'échappement (1b, 1d) des gaz dudit turbo-réacteur.

2. Turbo-générateur d'air comprimé selon la revendication 1, caractérisé en ce que l'articulation antérieure est une bielle (12) mobile reliant le boîtier du turbo-réacteur (1) au corps (5) du compresseur.

3. Turbo-générateur d'air comprimé selon la revendication 2, caractérisé en ce que ledit arbre (3) tourne à l'intérieur d'un tube (5) avec interposition d'un roulement postérieur (4) et d'au moins un roulement antérieur (8).

4. Turbo-générateur d'air comprimé selon la revendication 3, caractérisé en ce que ce tube (5) se termine à son extrémité arrière par une tête sphérique (5b) formant rotule pouvant osciller à l'intérieur d'une cage solidaire d'une partie fixe (1g), par exemple, la couronne centrale des aubes fixes.

5. Turbo-générateur d'air comprimé selon l'une des revendications 3 ou 4 précédentes, caractérisé en ce que dans sa partie postérieure, engagée à l'intérieur de la tubulure coudée (1b) d'évacuation des gaz, le tube (5) porte-roulement est enfermé dans un fourreau fixe, concentrique, l'espace annulaire (10) compris entre fourreau (9) et tube (5) étant en communication avec une tubulure (11) amenant de l'air haute pression sortant du compresseur du turbo-réacteur (1), ladite tubulure aboutissant au voisinage de l'articulation et du roulement arrière (4).

6. Turbo-générateur d'air comprimé selon la revendication 1, dans lequel le compresseur comprend une couronne d'aubes entraînée par l'arbre (3) de la turbine motrice (2) et tournant à l'intérieur de la chambre de·compression, caractérisé en ce que cette couronne refoule l'air comprimé dans la chambre de distribution (13) située concentriquement à ladite couronne, cette chambre de distribution étant de section radiale constante et non hélicoïdale.

## Claims

1. Turbogenerator for supplying compressed air to reaction blades of an helicopter rotary wing, comprising a compressor (2, 1f, 6, 6a) driven by a shaft (3) fixed to a rotary rim (2) of a driving turbine, characterized in that the driving turbine is disposed in the gas exhaust pipe (1b, 1d) of a turbojet engine, wherein longitudinal axes of said turbojet engine (1) and of said turbocompressor (2, 1f, 6, 6a) are convergent with respect one to the other, and that the compressor is hanging under the turbojet engine (1) through a joint, while the shaft (2) is linked with respect to the turbojet engine gas exhaust pipe (1b, 1d).

2. Turbogenerator for supplying compressed air according to claim 1, characterized in that the front joint is a moving connecting rod (12) joining the case of the turbojet engine with the compressor body (5).

3. Turbogenerator for supplying compressed air according to claim 2, characterized in that the shaft (3) rotates within a tube (5), with a rear bearing (4) and at least a front bearing (8) interposed between said shaft and tube.

4. Turbogenerator for supplying compressed air according to claim 2, characterized in that the tube (5) ends with its rear and part into a spherical head (5b) acting as a swivel joint able to swing within a casing integral with a fixed part (1g), for example the central rim of the fixed blades.

5. Turbogenerator for supplying compressed air according any one of precedent claim 3 or 4, characterized in that the tube (5) supporting said bearing is enclosed, with its rear part engaged within the bent exhaust gas pipe (1b), in a concentric fixed case (9), wherein annular space between said case (9) and tube (5) is in communicating relation with a pipe (11) delivering a high pressure air coming from the turbojet engine compressor (1), said pipe leading to the vicinity of said joint and rear bearing (4).

6. Turbogenerator for supplying compressed air according to claim 1, wherein said compressor comprises a blade rim drived by the shaft (3) of the driving turbine (2) and rotating within the compression chamber, characterized in that the rim forces compressed air back into the distribution chamber (13) concentrically arranged with respect to said rim, said distribution chamber having a constant non-helicoidal radial section.

## Ansprüche

1. Druckluft-Turbogenerator zur Versorgung der Rotorblätter des Drehflügeltragwerks eines Hubschraubers mit Strahltriebwerk, mit einem Verdichter (2, 1f, 6, 6a), der durch eine fest mit dem Drehkranz (2) einer Antriebsturbine verbundene Welle (3) in Drehbewegung versetzt wird, dadurch gekennzeichnet, dass diese Antriebsturbine in dem Abgasrohrstutzen (1b, 1d) eines Turbinenstrahltriebwerkes angeordnet ist, wobei die Längsachsen des Turbinenstrahltriebwerkes (1) und des Turboverdichters (2, 1f, 6, 6a) zusammenlaufen, und dass der Verdichter durch ein Gelenk (12) unter dem Turbinenstrahltriebwerk (1) aufgehängt ist, während die Welle (3) gegenüber dem Abgasrohrstutzen (1b, 1d) des vorgenannten Turbinenstrahltriebwerkes gelenkig gelagert ist.

2. Druckluft-Turbogenerator nach Anspruch 1, dadurch gekennzeichnet, dass die vordere Gelenkverbindung von einer beweglichen Kuppelstange (12) gebildet wird, die das Gehäuse des Turbinenstrahltriebwerkes (1) mit dem Verdichtergehäuse (5) verbindet.

3. Druckluft-Trubogenerator nach Anspruch 2, dadurch gekennzeichnet, dass die genannte Welle (3) sich unter Zwischenschaltung eines hinteren Wälzlagers (4) und wenigestens eines vorderen Wälzlagers (8) innerhalb eines Rohres (5) dreht.

4. Druckluft-Turbogenerator nach Anspruch 3, dadurch gekennzeichnet, dass dieses Rohr (5) an seinem hinteren Ende in einen Kugelkopf (5b) endet, der ein Knochengelenk bildet, das innerhalb eines fest mit einem feststehenden Teil (1g), zum Beispiel mit dem zentralen Leitschaufelkranz, verbundenen Gehäuses schwingen kann.

5. Druckluft-Turbogenerator nach einem der vorstehenden Ansprüche 3 oder 4, dadurch gekennzeichnet, dass der hintere Abschnitt des Wälzlagertragrohres (5), der in das Innere des gekrümmten Abgasrohrstutzens (1b) eingeführt ist, von einer feststehenden konzentrischen Hülse umschlossen ist, wobei der Ringraum (10) zwischen der Hülse (9) und dem Rohr (5) mit einem Rohrstutzen (11) in Verbindung steht, durch welchen die aus dem Verdichter des Turbinenstrahltriebwerkes (1) unter hohem Druck austretende Luft zugeführt wird und der genannte Rohrstutzen sich bis in die Nähe der Gelenkverbindung und des hinteren Wälzlagers (4) erstreckt.

6. Druckluft-Turbogenerator nach Anspruch 1, in dem der Verdichter einen von der Welle (3) der Antriebsturbine (2) angetriebenen Schaufelkranz umfasst und innerhalb des Verdichtungsraumes umläuft, dadurch gekennzeichnet, dass der genannte Kranz die Druckluft in den konzentrisch zu dem genannten Kranz angeordneten Verteilungsraum (13) fördert, wobei der genannte Verteilungsraum einen gleichbleibenden und nicht schraubenförmigen radialen Querschnitt aufweist.